# EUROPEAN PATENT APPLICATION

(11) **EP 4 843 643 A1**
(43) Date of publication of application: **25.11.2026**
(21) Application number: 26179612.2
(22) Date of filing: 19.05.2026
(51) Int. Cl.: A63F 13/577, A63F 13/52, A63F 13/57

(54) **IMAGE PROCESSING APPARATUS, IMAGE PROCESSING METHOD, AND IMAGE PROCESSING PROGRAM**

(30) Priority: 20.05.2025 JP 2025083765
(71) Applicant: SNK Corporation, Osaka-shi, Osaka 5320003 (JP)
(72) Inventor: FUJISHIGE, Kazuhiro, OSAKA-SHI, OSAKA (JP)
(74) Representative: Algemeen Octrooi- en Merkenbureau B.V.

(57) **Abstract**

An image processing apparatus (100) includes: a display unit (130) configured to display a virtual space in which a plurality of objects are present; a first determination unit (121) configured to determine, when a first object among the plurality of objects is knocked away, whether the knocked-away first object comes into contact with a second object different from the first object; a second determination unit (122) configured to determine, when the first object comes into contact with the second object, whether the second object is to be destroyed; and a display control unit (124) configured to display, when the second object is destructible, a state in which the second object is destroyed, the display control unit (124) being configured to display at least the second object in a compressed manner on the display unit (130).

## Description

### BACKGROUND OF THE INVENTION

### 1. Field of the Invention

The present invention relates to an image processing apparatus, an image processing method, and an image processing program that reduce the processing load of an interaction between objects in a virtual space.

### 2. Description of Related Art

A game is known in which a player can operate a character in a three-dimensional virtual space to destroy an object in the virtual space. In a game in the related art, a character in a virtual space directly attacks and destroys a destructible object within a predetermined range, based on an operation of a player. As a result, the entertainment of the game and the expressive quality of the game are enhanced.

Since each object in the three-dimensional virtual space has a three-dimensional model (3D model), when the player operates the character to destroy each object, it is possible to provide, for each object, a dramatic effect showing the object being destroyed and a video conveying a sense of speed. Meanwhile, the processing load of display processing for each object increases, and as a result, processing slowdown may occur and the display speed may decrease, giving rise to a problem in that the video conveying the sense of speed may be impaired.

A game system described in Japanese Unexamined Patent Application Publication No. 2013-030125 discloses, as a technique for reducing the processing load of physical computation, performing first collision determination processing based on movement of an object in an object space, and, when conditions such as a position of the object relative to a virtual camera do not satisfy predetermined conditions, performing, on an object determined to have collided by the first collision determination processing, second collision determination processing having a higher processing load than the first collision determination processing and collision response processing. Further, Japanese Unexamined Patent Application Publication No. 2007-272267 discloses an image generation system that, in an object space, identifies in advance a movement trajectory of a first object and a second object intersecting the movement trajectory, and also identifies in advance changes in the second object, thereby generating highly realistic and natural game images showing movement of a character when subjected to an impact having a property of causing positional movement of the object and collision with surrounding objects.

### SUMMARY OF THE INVENTION

Although JP2013-030125A and JP2007-272267A disclose methods of addressing image processing problems caused by the movement of the position of the object, there is still room for further reducing the processing load while maintaining the expressive quality of images in the virtual space.

Therefore, the present invention has been made in view of the above problem, and an object of the present invention is to achieve a further reduction in processing load when the respective objects come into contact with each other.

An image processing apparatus according to an aspect of the present invention may include: a display unit configured to display a virtual space in which a plurality of objects are present; a first determination unit configured to determine, when a first object among the plurality of objects is knocked away, whether the knocked-away first object comes into contact with a second object different from the first object; a second determination unit configured to determine, when the first object comes into contact with the second object, whether the second object is to be destroyed; and a display control unit configured to display, when the second object is destructible, a state in which the second object is destroyed, the display control unit being configured to display at least the second object in a compressed manner on the display unit.

In the image processing apparatus according to the aspect of the present invention, the first determination unit may be further configured to determine whether at least a portion of the second object comes into contact with a third object other than the first object and the second object as the second object is destroyed, and the second determination unit may be further configured to determine that the third object is to be destroyed when the first determination unit determines that at least a portion of the second object comes into contact with the third object.

The image processing apparatus according to the aspect of the present invention may further include a reception unit configured to receive, from an operation device, an operation command for causing a character operable by a player to act, and the character may cause an interaction with the object in accordance with the received operation command.

The image processing apparatus according to the aspect of the present invention may further include a chain unit configured to compute, as a chain count, the number of times contact between objects is chained, and the display control unit may be configured to adjust, stepwise, a compression ratio for compressing the object in accordance with the chain count.

In the image processing apparatus according to the aspect of the present invention, the display control unit may be configured to compress an image showing an event related to the object, and display the compressed image on the display unit.

An image processing method according to another aspect of the present invention may be executed by a computer, the image processing method including: a display step of displaying a virtual space in which a plurality of objects are present; a first determination step of determining, when a first object among the plurality of objects is knocked away, whether the knocked-away first object comes into contact with a second object different from the first object; a second determination step of determining, when the first object comes into contact with the second object, whether the second object is to be destroyed; and a display control step of displaying, when the second object is destructible, a state in which the second object is destroyed, the display control step including displaying at least the second object in a compressed manner.

An image processing program according to still another aspect of the present invention may cause a computer to execute: a display function of displaying a virtual space in which a plurality of objects are present; a first determination function of determining, when a first object among the plurality of objects is knocked away, whether the knocked-away first object comes into contact with a second object different from the first object; a second determination function of determining, when the first object comes into contact with the second object, whether the second object is to be destroyed; and a display control function of displaying, when the second object is destructible, a state in which the second object is destroyed, in which at least the second object is displayed in a compressed manner by the display function.

With the image processing apparatus, image processing method, and image processing program according to the present disclosure, it is possible to enhance the impact of the visual effects while reducing the processing load generated in displaying the video in real time in the virtual space.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing a configuration example of an image processing apparatus according to the present disclosure,
FIG. 2 is a diagram showing an example of a virtual space generated by the image processing apparatus of the first embodiment,
FIG. 3 is a diagram showing an example of an interaction between objects in the first embodiment,
FIG. 4 is a diagram showing an example of an effect generated by the interaction in the first embodiment,
FIG. 5 is a diagram showing an example of a virtual space generated by an image processing apparatus of a second embodiment,
FIG. 6 is a diagram showing an example of an interaction between objects in the second embodiment,
FIG. 7 is a diagram showing an example of an effect generated by the interaction in the second embodiment,
FIG. 8 is a flowchart showing an example of compression of an object according to the present disclosure,
FIG. 9 is a flowchart showing an example of a change in a compression ratio for compressing the object according to the present disclosure, and
FIG. 10 is a table showing a relationship between object information and the compression ratio according to the present disclosure.

### DETAILED DESCRIPTION OF EMBODIMENTS

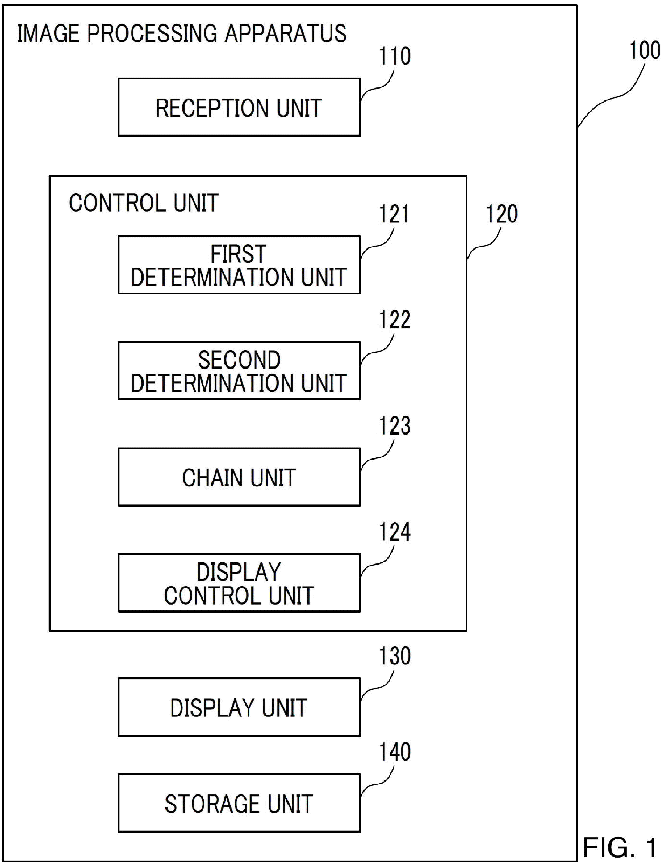

Hereinafter, examples of embodiments of the present invention will be described in detail with reference to the accompanying drawings. Here, a case will be described in which the present invention is applied to a game terminal, which is one aspect of an image processing apparatus 100. FIG. 1 is a block diagram showing a configuration example of the image processing apparatus 100 according to the present embodiment. The image processing apparatus 100 is a dedicated or general-purpose electronic device for a player to play a game. For example, the image processing apparatus 100 may be a home video game console, a handheld game machine, an arcade game machine, a personal computer, a smartphone, or a tablet, and may provide a game that operates on a stand-alone basis to the player, or may provide a server-client game that operates in conjunction with a server apparatus to the player. The image processing apparatus 100 according to the present embodiment includes a reception unit 110, a control unit 120 (including a first determination unit 121, a second determination unit 122, a chain unit 123, and a display control unit 124), a display unit 130, and a storage unit 140. The configuration of the image processing apparatus 100 according to the present disclosure is not limited to the above configuration. Hereinafter, each configuration will be described in detail.

The reception unit 110 is configured to receive, from an operation device, an operation command for causing a character operable by a player to act. The operation device according to the present disclosure is a device for the player to operate the game, and may be, for example, a controller, a keyboard, a mouse, a microphone, a camera, or a touch panel screen. The operation device may be built in the game terminal, or may be wirelessly connected or connected by wire to the game terminal. Further, a character according to the present disclosure is a character that the player operates or with whom the player becomes involved in the story, and the role and type of the character also vary depending on the type of the game and the game system. As an example, in a role-playing game (RPG) or an action game, the character may be directly moved and operated by the player. In addition, the operation command according to the present disclosure indicates a command given by the player to the character or the system in the game. As an example, the operation command may include movement (forward movement and backward movement), attack, avoidance, skill activation, jump, crouch, and menu operation of the character.

The control unit 120 is a processor that executes processing related to the game provided by the image processing apparatus 100 in response to the operation command received by the reception unit 110 from the operation device or various programs and various data stored in the storage unit 140, and implements functions required of the image processing apparatus 100. The game executed by the control unit 120 is a game in which a plurality of objects are displayed in a virtual space provided by the game, and at least some of the objects may be moved or come into contact with other objects in response to some event, and the objects may be destroyed upon contact. The control unit 120 according to the present embodiment functions as the first determination unit 121, the second determination unit 122, the chain unit 123, and the display control unit 124. Specifically, the display control unit 124 may analyze the command received from the operation device and control the character in the game in response to the analysis result, or may cause the character to act by the interaction between the objects in the game. The object according to the present embodiment is all elements constituting the game world, such as a character (player character) operable by the player, a non-player character (NPC), an item in the game, a background, and an effect. As an example, when a status of a character (which may include, for example, attribute information of the character, a skill level, and possessions) is changed by the interaction between the objects, processing performed by the control unit 120 may strengthen or weaken the character in accordance with the change in status, and when a game environment is changed by moving the object, processing performed by the control unit 120 may cause the interaction between the changed game environment and the character itself to occur. Further, the interaction in the present disclosure may include not only a case where the character acts on the object or receives an action from the object, but also a case where one object acts on another object or receives an action from another object. In such a case, at least one status of the character and each object may be changed by the interaction. As an example, the interaction according to the present disclosure may include an object being knocked away (or moved) by an acting force from a character or being destroyed, and may also include a player character acquiring an item or experience points (EXP) as a result of the character being knocked away or the object being destroyed.

The first determination unit 121 is configured to determine, when a certain object among the plurality of objects is knocked away (moved), whether the knocked-away object comes into contact with another object. In the present disclosure, the phrase "knocking away" refers to processing in which an object receives an acting force (for example, damage) from a character and is forcibly sent backward (moved) about a position at which the object receives the acting force. Specifically, in the virtual space according to the present embodiment, one or more objects are disposed, and each object may be further classified as destructible and indestructible depending on the type of the game or a preset in the game. Further, when the object is destructible, a setting may be made as to the degree of impact at which the object is destructible. When the object in the virtual space is indestructible, the object may be regarded as a decoration that embellishes the virtual space. In contrast, when the object in the virtual space is destructible, the player character causes the interaction with the object, and displays a different effect for each type of the object. As an example, in a case where the object is a building, an effect related to destruction of the building may be displayed when the player character destroys the building.

Whether the objects come into contact with each other in the present embodiment is determined based on the coordinates of each object or the coordinates of a portion belonging to the object. The portion belonging to the object refers to an article set for a certain object or data set for an entire character, and even when the object is destroyed or deformed, what has originally been set as the object, including a destroyed fragment of the object and the object after deformation, is regarded as a portion belonging to the original object. Specifically, each object in the virtual space has coordinate information, and the coordinate information of the character changes over time in accordance with the operation of the player. Each object in the virtual space also has coordinate information for each type, and changes (moves) depending on the object. On the contrary, when the object is an enemy character or a movable object in the virtual space, the object may also have coordinate information that changes over time, like the player character. In this case, the image processing apparatus 100 may determine whether or not there is contact based on the coordinate information of the character and each object or between objects. As an example, it is assumed that an object A is given a coordinate range of (20 to 50, 30 to 70, 0 to 100). In this case, in a case where the coordinate range of the character that moves in accordance with the operation of the player is adjacent to or overlaps with the coordinate range set for the object A, it may be determined that the object and the character come into contact with each other. For example, in a case where the coordinates of the character (a portion of the character) are (22, 29, 50), it may be determined that the character is in contact with the object A. In addition, in such a case, in a case of a moving object (for example, a character moved by the user), it may be determined whether the character and the object or the objects come into contact with each other by taking into account a vector in a moving direction.

Further, for display control of the character or the object by the display control unit 124, the first determination unit 121 may assign, to each character or object, a number indicating the contact number at which the character or the object moves or is destroyed. In the game provided by the image processing apparatus 100, a process may occur in which the character or the object is knocked away (moves) by an attack of the character or some event, and when the character or the object is knocked away and another object, for example, is present ahead thereof, the game may give rise to a movement chain in which the other object is also knocked away or destroyed and a destruction chain. Accordingly, the term "contact number" referred to herein indicates which stage in the chain is involved, and the numbering may be used to determine a compression stage (degree of compression) in compressed display of the object, described later. As an example, in a case where the character first comes into contact with the object A and the number of interactions in the virtual space is one, the object A may be the first object, and thereafter, in a case where the character continuously comes into contact with the object B and the number of interactions in the virtual space is two, the object B may be the second object. However, the present invention is not limited thereto, and when the character comes into contact with the object A and stops, and the object A comes into contact with the object B due to the damage received from the character, the number of interactions in the virtual space is two, and the object B may be the second object.

Also, as the second object is destroyed, the first determination unit 121 may further define an object other than the first object and the second object as a third object, and determine whether a portion belonging to the second object comes into contact with the third object. As an example, in a case where the character knocks away the first object (for example, an indestructible enemy character) to destroy the second object (for example, a destructible building), the first determination unit 121 may further determine whether a portion belonging to the destroyed second object (for example, a destructible building) comes into contact with another object (or the third object). When the third object is destructible (for example, a destructible building), the third object may be destroyed by a portion belonging to the second object. Further, when there is an object other than the first object, the second object, and the third object, the first determination unit 121 may determine whether a portion belonging to the third object comes into contact with another object. Therefore, in a case where a certain object is destroyed, the first determination unit 121 may ascertain whether another object is to be destroyed in determining whether a portion belonging to the object comes into contact with another object. The portion belonging to the second object according to the present embodiment is not limited, and may be a second object that is deformed when the second object is destroyed, a fragment of the second object, or an article belonging to the first object. Similarly, when the third object is destroyed, the first determination unit 121 may regard an object other than the first object, the second object, and the third object as a fourth object. Therefore, the first determination unit 121 may assign a number to each object based on the object in the virtual space and the number of times the object is destroyed.

The second determination unit 122 is configured to determine whether the first object can destroy the second object based on the determination result of the first determination unit 121. Specifically, in a case where the first object is knocked away by the damage received from the character and the second object is present on a parabolic trajectory during the movement of the first object, the second determination unit 122 determines whether the second object is destructible. In a case where the second object is not destructible, the first object may be knocked away by the acting force received from the character, come into contact with the second object, and be destroyed, or may fall around the second object. In contrast, in a case where the second object is destructible, the first object is knocked away by the interaction with the character, comes into contact with the second object, and destroys the second object.

In addition, the second determination unit 122 may determine whether the third object can be destroyed based on the determination result of the first determination unit 121. Specifically, when the second determination unit 122 determines that the third object cannot be destroyed based on the determination result of the first determination unit 121, the image processing apparatus 100 does not destroy the third object based on the determination result of the second determination unit 122. In contrast, when the second determination unit 122 determines that the third object can be destroyed based on the determination result of the first determination unit 121, the image processing apparatus 100 may cause the chain unit 123 to destroy the third object based on the determination result of the second determination unit 122.

The chain unit 123 is configured to compute the number of times the contact between the objects is chained in the virtual space, as a chain count. Specifically, in a case where all of the first object, the second object, and the third object are destructible, the chain unit 123 destroys the objects in order based on the position and the state (whether the object is destructible) of the character and each object, and computes the chain count based on the contact between the objects. Further, in the chain unit 123, the manner in which the respective objects are destroyed is not limited, and each object may be destroyed about a point of contact when the respective objects come into contact with each other, or a model of each object may be destroyed through damage caused by collision between the respective objects. As an example, in a case where the first object comes into contact with the left side of the second object, the second object may be destroyed from the left side. When the first object comes into contact with the upper portion of the second object, the second object may be destroyed by the damage received from the first object and may fall backward.

The display control unit 124 is configured to display, when the second object is destructible, a state in which the second object is destroyed, compress at least the second object, and display the compressed second object on the display unit 130. The display in a compressed manner may include displaying a target object (the second object) at a reduced resolution (with a lower dpi), that is, by downsampling the target object. That is, the second object may be displayed at a lower rendering accuracy than an original rendering accuracy. As an example of downsampling, block averaging (average pooling) may be used. Specifically, the display control unit 124 first displays a state of the object in accordance with whether the object in a predetermined virtual space can be destroyed. For example, in a case where the character knocks away the first object and comes into contact with the second object that is indestructible by the operation command of the player, the display control unit 124 displays a state in which the second object is not destroyed and the first object is bounced back by the reaction based on the chain result of the chain unit 123. In contrast, in a case where the character knocks away the first object and comes into contact with the second object that is destructible by the operation command of the player, the display control unit 124 displays a state in which the second object is destroyed based on the chain result of the chain unit 123. In this case, the display control unit 124 compresses the image of the object in accordance with the state of the first object and the second object, and displays the compressed image on the display unit 130.

Further, the display control unit 124 adjusts, stepwise, the compression ratio for compressing the image of the object in accordance with the information on the contact with the object. The compression ratio of an image according to the present embodiment is a ratio indicating to what extent image data has been reduced, as compared with an original data amount, when the image data is compressed. Specifically, the display control unit 124 may set different compression ratios for each of the chain count, the type of the object, and the state (whether the object is destructible) of the object, as the compression ratio of the image of the object. In a case where the object is destructible and the chain is performed a plurality of times, the display control unit 124 may increase the compression ratio in accordance with the number of times of the chain between the objects. In contrast, in a case where the object is indestructible, the display control unit 124 need not compress the image of the object. In the virtual space according to the present embodiment, each object is composed of a plurality of materials, and in a case where the object is destroyed, the images of the respective materials may be simultaneously compressed. As an example, in a case where the object is a building and is destroyed by the character operated by the player, the images of the fragments constituting the object may be simultaneously compressed.

Further, the display control unit 124 compresses the image showing an event related to the object, and displays the compressed image on the display unit 130. The event according to the present embodiment is an effect or a visual effect produced after the object is destroyed. For example, in a case where the object is a building and is destroyed by the character operated by the player, the image processing apparatus 100 may generate an image of an event such as dust or smoke caused by the collapse of the object (for example, a house), the ejection of water in a case where a fire or a water pipe is ruptured, and may compress the image showing the event. In this case, the display control unit 124 may apply different compression ratios for each event.

The display unit 130 is configured to display the virtual space in which the plurality of objects are present. Specifically, the display unit 130 displays each object in the virtual space, the enemy character, the player character, the event, a background, in-game weather, and an image after compression, for example.

The storage unit 140 is a storage medium that stores various programs and various data necessary for the operation of the image processing apparatus 100. The storage unit 140 may be implemented by, for example, a hard disk drive (HDD), a solid state drive (SSD), and a flash memory, but is not limited thereto. In addition, the storage unit 140 may constitute a read only memory (ROM) or a random access memory (RAM) as a work area for executing a program. Further, the storage unit 140 may store an operation history of the player, a status of the character operated by the player (for example, attribute information of the character, a skill level, and possessions), a state of each object in the virtual space (whether the object is destructible), and game progress, for example.

### First Embodiment

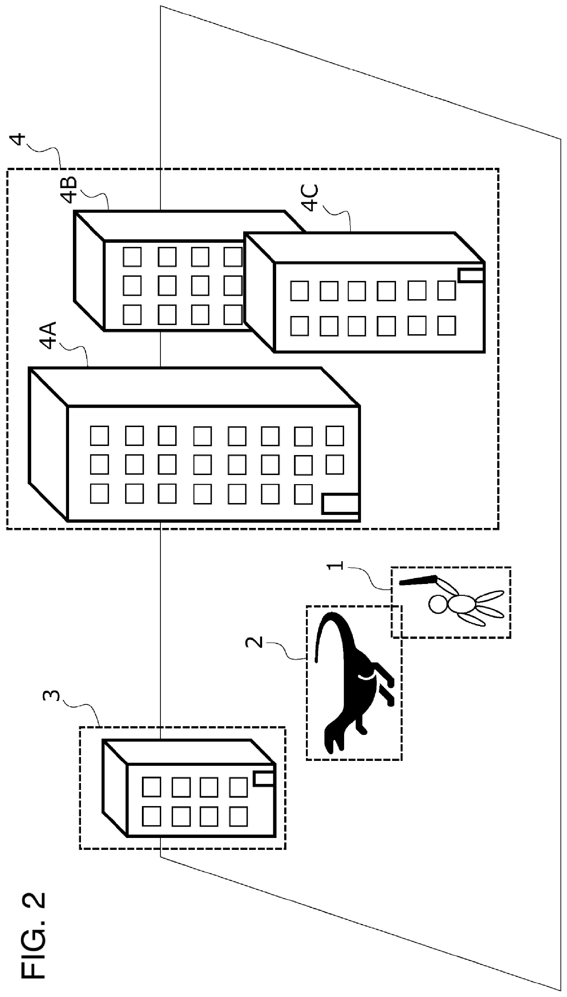

Hereinafter, a first embodiment of the image processing apparatus 100 according to the present embodiment will be described in detail with reference to FIGS. 2 to 4. FIG. 2 is an example of a game screen displayed by the display unit 130. In a virtual space according to the present embodiment, a player character 1, an enemy character 2, an object 3, and an object 4 (including an object 4A, an object 4B, and an object 4C) are present. The image processing apparatus 100 may cause the player character to generate an interaction with each object in the virtual space. Further, the player character 1, the enemy character 2, and the object 3 according to the present embodiment are located on the same straight line.

Specifically, the player character 1 attacks the enemy character 2, and the enemy character 2 can destroy the object 3 or the object 4 by being knocked away due to damage received from the player character 1. As an example, in a case where the enemy character 2 is controlled by the image processing apparatus 100 and the player character 1 attacks the enemy character 2, the player character 1 may attack or defend in response to the operation of the enemy character 2. Furthermore, the enemy character 2 may receive an attack from the player character 1, come into contact with the object 3 or the object 4, and destroy the object 3 or the object 4. In addition, the player character 1 may climb on the object 3 or the object 4 or destroy a portion of the object 3 or the object 4.

In addition, each object may change a state (whether the object is destructible) in accordance with the rule set in advance by the image processing apparatus 100. The rule according to the present embodiment changes the state of the object in accordance with the status of the character (for example, attribute information, a skill level, and possessed items of the character), the weather or the environment in the virtual space, and the game progress (for example, a main story, a main quest, a sub-story, and a sub-quest), for example. As an example, the rule set by the image processing apparatus 100 is related to the level of the player character 1, and in a case where the level has not reached a predetermined level, the player character 1 cannot destroy the object 3 or the object 4. Conversely, as an example, the rule set by the image processing apparatus 100 is related to the level of the player character 1, and in a case where the level has reached a predetermined level, the player character 1 can destroy the object 3 or the object 4, and the image processing apparatus 100 may display, on the display unit 130, an image in which the object 3 or the object 4 is destroyed and compressed.

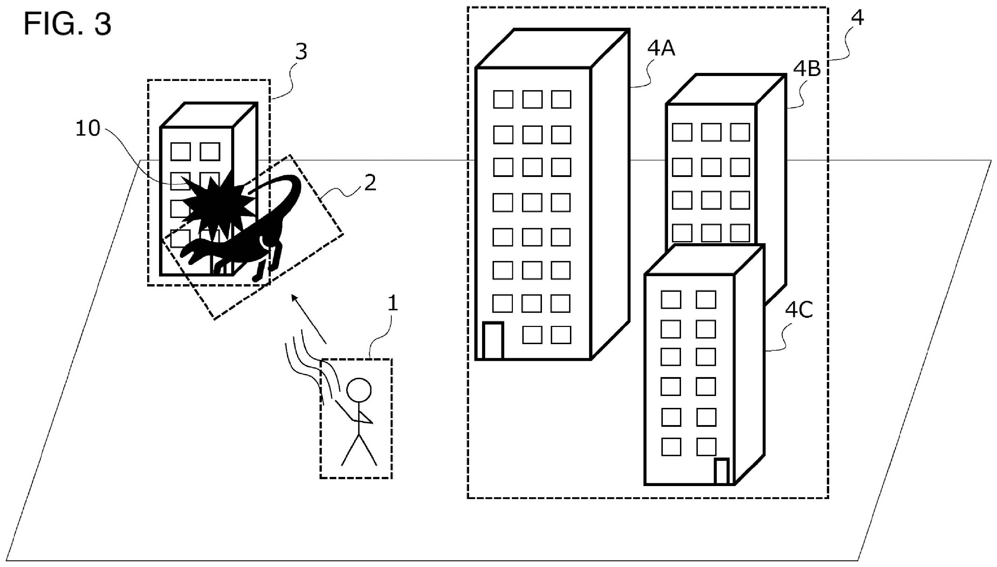

FIG. 3 is a diagram showing an example in which the enemy character 2 is knocked away by the player character 1 in the virtual space. In a case where the player character 1 attacks the enemy character 2, the enemy character 2 is knocked away in accordance with a relative position with the player character 1 and the damage received from the player character 1. In a case where another object is present on a route on which the enemy character 2 is knocked away, the enemy character 2 comes into contact with the object. A point at which the enemy character 2 comes into contact with the object may be a first contact point 10. The enemy character may destroy the object centered on the first contact point 10 or may come into contact with the object to stop the enemy character 2 from being knocked away.

Further, the enemy character 2 of the present disclosure has different action results depending on the type and the status. Specifically, when the enemy character 2 has health points (which may also be referred to as hit point (HP), life point (LP), and vitality, for example), the image processing apparatus 100 adjusts expressive quality of the interaction with the object in accordance with remaining health points of the enemy character 2. For example, in a case where the enemy character 2 receives damage from the player character 1 and still has remaining health points, the enemy character 2 may act in accordance with the remaining health points without being destroyed. In contrast, in a case where the damage received from the player character 1 is accumulated and there is no remaining health points, the enemy character 2 is destroyed by the player character 1, and the player character 1 may acquire experience points obtained by quantifying the degree of growth or the degree of experience of the player character 1, in-game items, for example. On the other hand, in a case where the health points are not set for the enemy character 2, the enemy character 2 may be destroyed by the damage from the player character 1 or may not react.

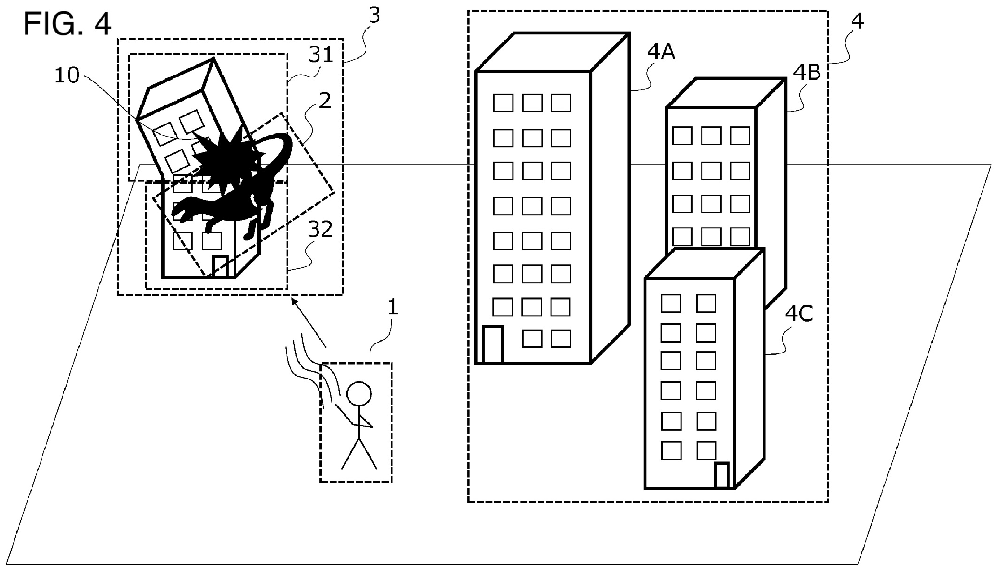

FIG. 4 is a diagram showing an example in which the enemy character 2 is attacked by the player character 1 in the virtual space and is knocked away to come into contact with another object. Specifically, the player character 1 attacks the enemy character 2, and the enemy character 2 is knocked away by the damage from the player character 1 and comes into contact with the object 3. Then, the object 3 is divided into an object fragment 31 and an object fragment 32 centered on the first contact point 10. However, the present invention is not limited thereto, and contact with the enemy character 2 may cause the object 3 to break up into a plurality of irregular fragments, or contact with the object 3 may cause the enemy character 2 to break up into a plurality of portions.

Further, in a case where the enemy character 2 comes into contact with the object 3 and the object 3 is divided into a plurality of portions, the display control unit 124 may compress the images of the object fragment 31 and the object fragment 32. The method of compressing an image according to the present embodiment is not limited, but when the enemy character 2 comes into contact with the object 3, the display control unit 124 may compress an image of the object 3 and display images showing the compressed object fragment 31 and compressed object fragment 32 separated from the compressed image, or may display compressed images showing the object fragment 31 and the object fragment 32 separated from the object 3 without compressing the image of the object 3. However, the present invention is not limited thereto, and the display control unit 124 may reduce the frame rate of the screen when the enemy character 2 comes into contact with the object 3, or may reduce the frame rate of the entire screen when the object 3 is changed to the object fragment 31 and the object fragment 32, or may reduce the resolution of the object 3, the object fragment 31, and the object fragment 32.

### Second Embodiment

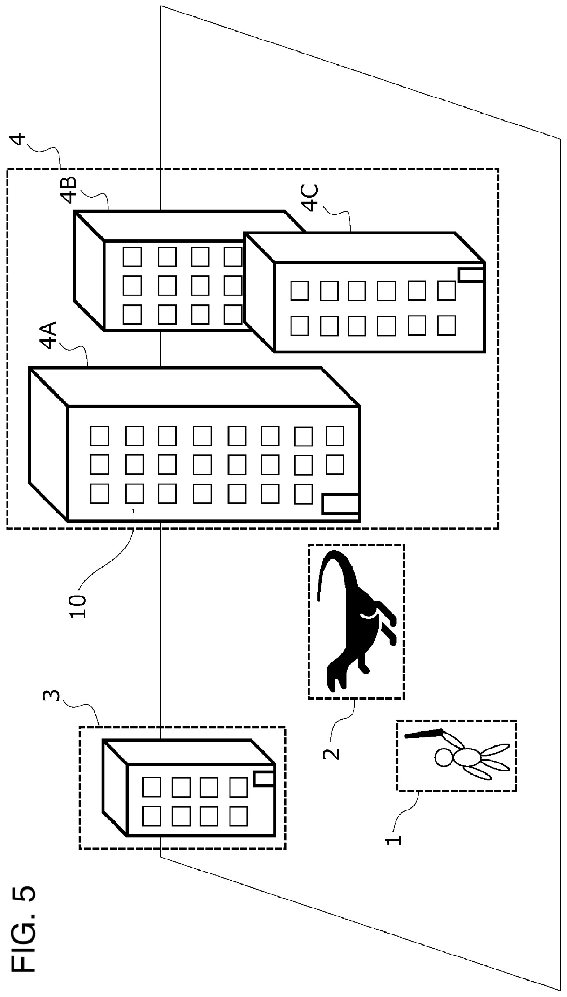

Hereinafter, a second embodiment of the image processing apparatus 100 according to the present embodiment will be described in detail with reference to FIGS. 5 to 7. FIG. 5 is an example of a game screen displayed by the display unit 130, in the same manner as in FIG. 2. In a virtual space according to the present embodiment, a player character 1, an enemy character 2, an object 3, and objects 4 (including an object 4A, an object 4B, and an object 4C) are present. The image processing apparatus 100 may cause the player character 1 to generate an interaction with each object in the virtual space. Further, the player character 1, the enemy character 2, and the objects 4 according to the present embodiment are located on the same straight line.

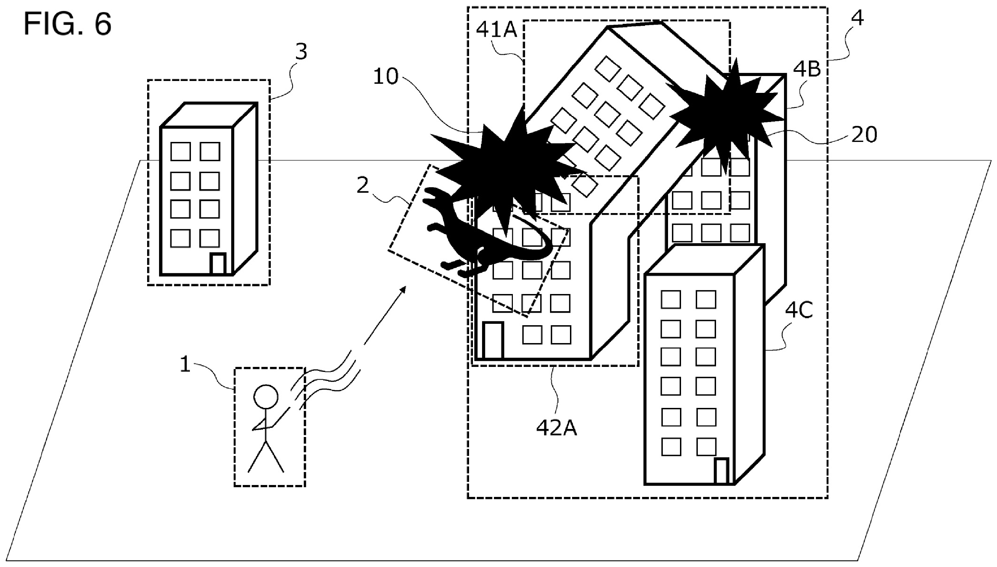

Specifically, in the second embodiment, in a case where the player operates the player character 1 to attack the enemy character 2, the enemy character 2 may come into contact with the object 4 having a plurality of objects by the acting force of the damage received from the player character 1. FIG. 6 is a diagram showing an example of the interaction between objects in the second embodiment. When the enemy character 2 is knocked away by the damage received from the player character 1 and comes into contact with the object 4A, the display control unit 124 may compress a screen in which the object 4A is destroyed, centered on the first contact point 10 between the enemy character 2 and the object 4A, and display the compressed screen on the display unit 130. In addition, when a plurality of fragments are generated by the destruction of the object 4A and the fragments come into contact with another object 4B, the display control unit 124 may compress a screen in which the object 4B is destroyed, centered on the second contact point 20 between the fragment of the object 4A and the object 4B, and display the compressed screen on the display unit 130.

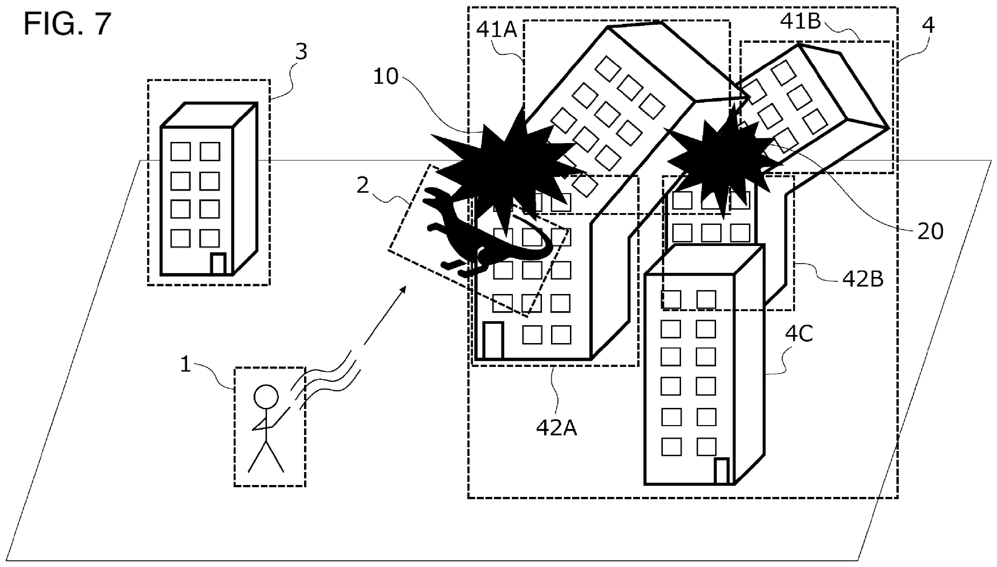

FIG. 7 is a diagram showing an example in which an object fragment 41A of the object 4A comes into contact with the object 4B to generate an effect in the second embodiment. Specifically, the object 4A is destroyed by the damage received from the enemy character 2, and is decomposed into the object fragment 41A and an object fragment 42A. The object fragment 41A according to the present embodiment is a portion of the object 4A, and the first determination unit 121 first determines whether the object fragment 41A comes into contact with the object 4B. When the object fragment 41A does not come into contact with the object 4B, the display control unit 124 may compress the images of the enemy character 2, the object fragment 41A, and the object fragment 42A and display the compressed images on the display unit 130.

In contrast, when the object fragment 41A comes into contact with the object 4B, the second determination unit 122 determines whether the object 4B is destructible. When the object 4B is determined to be indestructible, the display control unit 124 may compress the images of the enemy character 2, the object fragment 41A, and the object fragment 42A and display the compressed images on the display unit 130. When the object 4B is determined to be destructible, the object fragment 41A comes into contact with the object 4B, and the contact point is set as a second contact point 20. Thereafter, the chain unit 123 may cause object 4B to be destroyed by object fragment 41A with the second contact point 20 as a center, and object 4B may be further decomposed into an object fragment 41B and an object fragment 42B. Further, the display control unit 124 may further compress the images of the object fragment 41B and the object fragment 42B after compressing the images of the object fragment 41A and the object fragment 42A.

In the second embodiment, in a case where the chain unit 123 computes the number of times of the chain between the objects, the display control unit 124 may reduce, stepwise, the compression ratio of the image showing each object and the fragment of the object in accordance with the chain count. As an example, in a case where the player character 1 attacks the enemy character 2, the display control unit 124 first compresses the image of the enemy character 2. In this case, the compression ratio for compressing the image showing the enemy character 2 may be, for example, 25 percent. Thereafter, in a case where the enemy character 2 receives damage and is knocked away to come into contact with the object 4A and the object 4A is determined to be destructible, the display control unit 124 further compresses the object fragment 41A and the object fragment 42A when the object 4A is destroyed by the enemy character 2 to generate the object fragment 41A and the object fragment 42A. In this case, the compression ratio for compressing the image showing the object fragment 41A and the object fragment 42A may be a compression ratio (for example, 50 percent) higher than the compression ratio for compressing the image showing the enemy character 2. Next, in a case where the object fragment 41A comes into contact with the object 4B and the object 4B is determined to be destructible, the display control unit 124 may compress the images showing the object fragment 41B and the object fragment 42B by a compression ratio (for example, 75 percent) higher than the compression ratio for compressing the images showing the object fragment 41A and the object fragment 42A when the object 4B is destroyed by the object fragment 41A to generate the object fragment 41B and the object fragment 42B.

### Operation

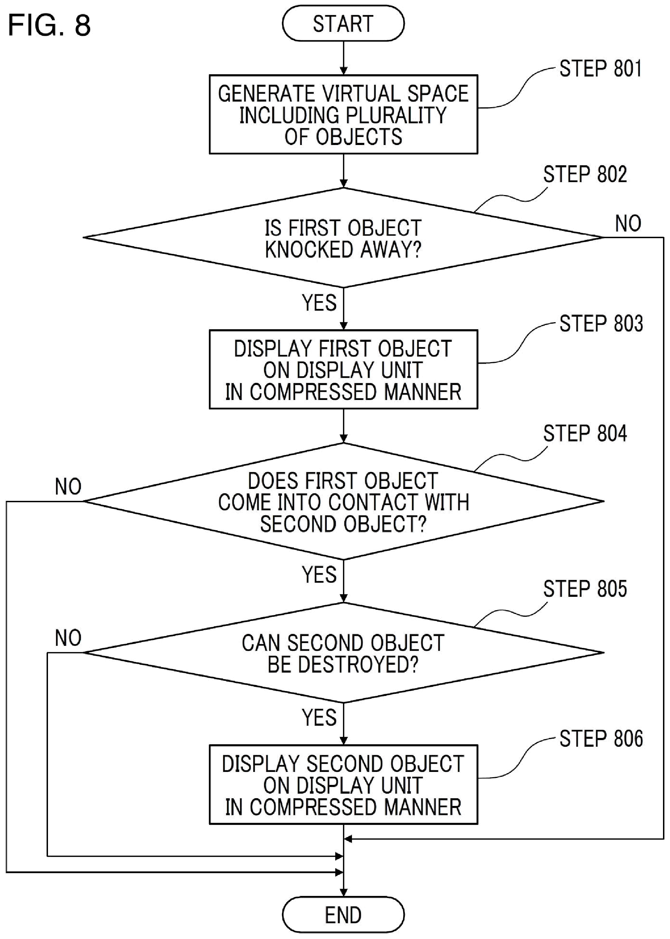

Hereinafter, an operation of the image processing apparatus 100 of the present disclosure will be described. FIG. 8 is a flowchart showing whether to compress the image of each object in the virtual space displayed by the display unit 130. First, the display unit 130 mounted on the image processing apparatus 100 generates and displays the virtual space including the plurality of objects (step 801). Each object in the virtual space may be divided into a destructible object and an indestructible object in accordance with the rule set in advance.

In such a case, the player may operate the character in the virtual space to come into contact with each object. The object that comes into contact first may be set as the first object. Next, the first determination unit 121 mounted on the image processing apparatus 100 determines whether the character comes into contact with the first object and the first object is knocked away (step 802). The contact according to the present embodiment is not limited to knocking away, and any interaction between objects may suffice, including, for example, movement of an object and attack or defense of the character.

If the first object does not come into contact with the character and is not knocked away (NO in step 802), the display control unit 124 included in the image processing apparatus 100 terminates the operation from this point. In contrast, if the first object comes into contact with the character and is knocked away (YES in step 802), the display control unit 124 mounted on the image processing apparatus 100 displays the image showing the character and the image showing the first object on the display unit 130 in a compressed manner (step 803).

Then, the first determination unit 121 mounted on the image processing apparatus 100 determines whether the first object comes into contact with the second object (step 804). If it is determined that the first object does not come into contact with the second object (NO in step 804), the function of the display control unit 124 mounted on the image processing apparatus 100 may be terminated.

In contrast, if it is determined that the first object comes into contact with the second object (YES in step 804), the second determination unit 122 mounted on the image processing apparatus 100 further determines whether the second object can be destroyed (step 805). If it is determined that the second object is destructible based on the determination result of the second determination unit 122, the display control unit 124 compresses the image showing the second object, and displays the compressed image on the display unit 130 when the second object is destroyed by the first object (step 806).

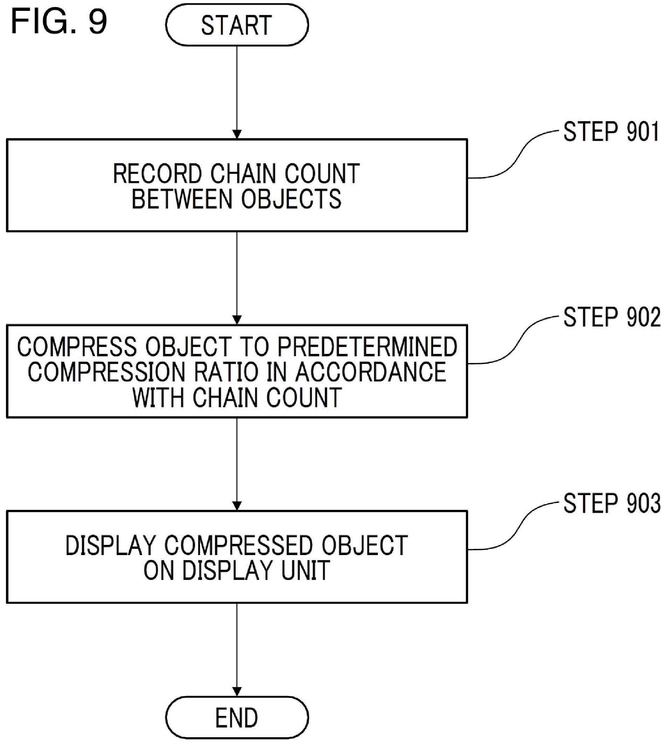

FIG. 9 is a flowchart showing an example of a change in the compression ratio for compressing the object under control of the display control unit 124. First, the image processing apparatus 100 stores, in the storage unit 140, the chain count of each object in the virtual space (step 901). The chain count of the present disclosure is the number of times an object comes into contact with another object and the status of each object changes. As an example, in a case where the first object comes into contact with the second object and the status of the second object is changed, the image processing apparatus 100 records the chain count as 1. In a case where the second object comes into contact with the third object due to the damage received from the first object, and the status of the third object is changed, the image processing apparatus 100 records the chain count as 2. However, in a case where the first object comes into contact with the second object, and neither the status of the first object nor the status of the second object changes, the image processing apparatus 100 may record the chain count as 0.

Thereafter, the image processing apparatus 100 compresses the image of the object to a predetermined compression ratio in accordance with the chain count stored in the storage unit 140 (step 902). As the compression ratio of the image showing the object becomes higher, the image quality of the image showing the object becomes lower, but the file size becomes smaller, so that the image processing apparatus 100 can reduce the processing load on the object in the virtual space. On the other hand, as the compression ratio of the image showing the object becomes lower, the image quality of the image showing the object is maintained well, but the file size becomes larger, and the processing load on the object in the virtual space becomes higher for the image processing apparatus 100. Finally, the image processing apparatus 100 displays, on the display unit, the object compressed to the predetermined compression ratio (step 903).

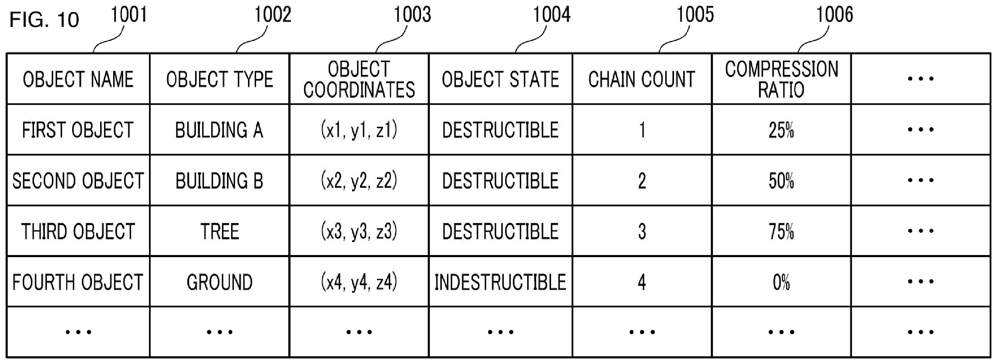

FIG. 10 is an example of a table showing a relationship between the object information and the compression ratio according to the present disclosure. The image processing apparatus 100 stores, in the storage unit 140, information including an object name 1001, an object type 1002, object coordinates 1003, an object state 1004, a chain count 1005, and a compression ratio 1006 of each object in the virtual space.

Specifically, the image processing apparatus 100 defines the object as the first object, the second object, and the third object, for example, based on the presence or absence of a change in the status caused by the contact between the objects, and stores the type of each object in the storage unit 140. As an example, in a case where the player operates the character to destroy the destructible building A, the image processing apparatus 100 acquires the coordinates (X1, Y1, Z1) of the building A in the virtual space, and stores the coordinates in the storage unit 140 as the first object. In this case, because the first object (building A) performed the first chain through interaction with the character, the image processing apparatus 100 records the chain count of the object A as one and stores the recorded chain count in the storage unit 140. Further, the image processing apparatus 100 compresses the image of the first object (building A) at a compression ratio (for example, 25%) set in advance in accordance with the chain count. Thereafter, in a case where the first object further comes into contact with the second object (building B) and changes the status of the second object, the image processing apparatus 100 acquires the status, the coordinates, and the chain count of the second object (building B), and compresses the second object at a predetermined compression ratio (for example, 50%).

The foregoing is a description of the image processing apparatus 100 according to the present embodiment. The operation examples and the embodiments of the image processing apparatus 100 are not limited thereto. The same reference signs denote the same or equivalent constituent elements, processing, and signals shown in the respective drawings, and redundant description will be omitted as appropriate. Further, in each drawing, some components that are not important in the description are omitted.

### Supplementary Description

Although the image processing apparatus 100 according to the above embodiments has been described, the present invention is not limited to the above embodiments. Hereinafter, various modification examples will be described.
(1) In each of the above embodiments, the image processing apparatus 100 according to the present embodiment may further include a resolution adjustment unit that implements Deep Learning Super Sampling (DLSS), FidelityFX Super Resolution (FSR), and Adaptive Scalable Texture Compression (ASTC), for example. Specifically, the resolution adjustment unit may use artificial intelligence (AI) to increase the resolution of the low-resolution image or decrease the resolution of the high-resolution image. As a result, the image processing apparatus 100 does not need to store, in advance, an ultra-high resolution image or a low-resolution image, and it is possible to save storage or bandwidth.
(2) In each of the above embodiments, the image processing apparatus 100 according to the present embodiment may be connected to a cloud server via a network. For example, the image processing apparatus 100 may further provide a cloud gaming service, and the game may be played via the Internet without being installed on a terminal on the player side. In this case, information processing in the game is performed by the server on the cloud, and the image processing apparatus 100 may dynamically compress only necessary portions.
(3) In each of the above embodiments, the image processing apparatus 100 according to the present embodiment may compress an image showing an object (that is, a first object or an enemy object) that is attacked by a character operable by a player. Specifically, when the character operable by the player comes into contact with the first object, the image processing apparatus 100 may compress an image showing the first object, using the contact between the character and the first object as a trigger.
(4) In each of the above embodiments, in a game method according to the present embodiment, a computer executes: a display step of displaying a virtual space in which a plurality of objects are present; a first determination step of determining, when a first object among the plurality of objects is knocked away, whether the knocked-away first object comes into contact with a second object different from the first object; a second determination step of determining, when the first object comes into contact with the second object, whether the second object is to be destroyed; and a display control step of displaying, when the second object is destructible, a state in which the second object is destroyed, wherein at least the second object is displayed in a compressed manner in the display step. As a result, the game method can achieve effects similar to those of the image processing apparatus 100 described above.
(5) In each of the above embodiments, a game program according to the present embodiment causes a computer to execute: a display function of displaying a virtual space in which a plurality of objects are present; a first determination function of determining, when a first object among the plurality of objects is knocked away, whether the knocked-away first object comes into contact with a second object different from the first object; a second determination function of determining, when the first object comes into contact with the second object, whether the second object is to be destroyed; and a display control function of displaying, when the second object is destructible, a state in which the second object is destroyed, in which at least the second object is displayed in a compressed manner via the display function. As a result, the game program can achieve effects similar to those of the image processing apparatus 100 described above.
(6) In the above embodiments, with respect to the image processing apparatus, image processing method, image processing program, and control procedure according to the present embodiment, particularly the processing procedures described with reference to block diagrams and flowcharts, the processing methods and procedures may be modified by omitting some steps, adding new steps, substituting steps for one another, or changing the order of steps, and processing procedures including such omissions, additions, substitutions, or changes in order are also included within the scope of the present disclosure insofar as the processing procedures do not depart from the gist of the present disclosure.

### Description of Reference Numerals

1: player character
2: enemy character
3: object
100: image processing apparatus
110: reception unit
120: control unit
121: first determination unit
122: second determination unit
123: chain unit
124: display control unit
130: display unit
140: storage unit
10: first contact point
20: second contact point
1001: object name
1002: object type
1003: object coordinates
1004: object state
1005: chain count
1006: compression ratio

## Claims

1. An image processing apparatus (100) comprising:
a display unit (130) configured to display a virtual space in which a plurality of objects are present;
a first determination unit (121) configured to determine, when a first object among the plurality of objects is knocked away, whether the knocked-away first object comes into contact with a second object different from the first object;
a second determination unit (122) configured to determine, when the first object comes into contact with the second object, whether the second object is to be destroyed; and
a display control unit (124) configured to display, when the second object is destructible, a state in which the second object is destroyed, the display control unit (124) being configured to display at least the second object in a compressed manner on the display unit (130).

2. The image processing apparatus (100) according to claim 1,
wherein the first determination unit (121) is further configured to determine whether at least a portion of the second object comes into contact with a third object other than the first object and the second object as the second object is destroyed, and
the second determination unit (122) is further configured to determine that the third object is to be destroyed when the first determination unit (121) determines that at least a portion of the second object comes into contact with the third object.

3. The image processing apparatus (100) according to claim 2, further comprising:
a reception unit (110) configured to receive, from an operation device, an operation command for causing a character operable by a player to act,
wherein the character causes an interaction with the object in accordance with the received operation command.

4. The image processing apparatus (100) according to claim 2, further comprising:
a chain unit (123) configured to compute, as a chain count, the number of times contact between objects is chained,
wherein the display control unit (124) is configured to adjust, stepwise, a compression ratio for compressing the object in accordance with the chain count.

5. The image processing apparatus (100) according to claim 4,
wherein the display control unit (124) is configured to compress an image showing an event related to the object, and display the compressed image on the display unit (130).

6. An image processing method executed by a computer, the image processing method comprising:
a display step of displaying a virtual space in which a plurality of objects are present;
a first determination step of determining, when a first object among the plurality of objects is knocked away, whether the knocked-away first object comes into contact with a second object different from the first object;
a second determination step of determining, when the first object comes into contact with the second object, whether the second object is to be destroyed; and
a display control step of displaying, when the second object is destructible, a state in which the second object is destroyed, the display control step including displaying at least the second object in a compressed manner.

7. An image processing program causing a computer to execute:
a display function of displaying a virtual space in which a plurality of objects are present;
a first determination function of determining, when a first object among the plurality of objects is knocked away, whether the knocked-away first object comes into contact with a second object different from the first object;
a second determination function of determining, when the first object comes into contact with the second object, whether the second object is to be destroyed; and
a display control function of displaying, when the second object is destructible, a state in which the second object is destroyed, the display control function including displaying at least the second object in a compressed manner.
